(19) Europäisches Patentamt
European Patent Office
Office européen des brevets

(11) **EP 1 983 714 A1**

(12) **EUROPEAN PATENT APPLICATION**

(43) Date of publication:
**22.10.2008 Bulletin 2008/43**

(51) Int Cl.:
***H04L 29/06*** (2006.01)     ***H04L 12/26*** (2006.01)

(21) Application number: **07008085.8**

(22) Date of filing: **20.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks Oy**
**02610 Espoo (FI)**

(72) Inventors:
• **Freire, Máro**
 **6200-314 Covilha (PT)**
• **Garcia, Nuno**
 **6200-502 Covilha (PT)**

• **Hajduczenia, Marek**
 **4505-314 Fiaes (PT)**
• **Inacio, Pedro**
 **6200-230 Aldeia de Carvalho (PT)**
• **Monteiro, Paulo**
 **3930-209 Ilhavo (PT)**
• **Silva, Henrique**
 **3030-076 Coimbra (PT)**

(74) Representative: **Fischer, Michael**
 **Nokia Siemens Networks GmbH & Co.KG**
 **Intellectual Property Rights**
 **P.O.Box 80 17 60**
 **81541 München (DE)**

(54) **Method for detection of malign instrusions in a communication system and related detector**

(57)    A method is proposed for detection of malign intrusions in a communication system in which flows of streaming data are monitored by means of a processing module in which a set of streaming data points has been sequentially inputted into a processing module in order to calculate a first value of a self-similarity degree. Furthermore, said first value of self-similarity degree is calculated by means of a plurality (index k) of auxiliary variables, wherein said index ($k \geq 1$) is continuously incremented for each new fed data point. Furthermore, a new streaming data point is fed into a corresponding modified estimator (= mE) comprising the processing module that runs under a first mode wherein a second actualized value of the self-similarity degree is newly calculated. Now and according to a (possibly pre-definable) finite number n of data points, the processing module provides a windowed based calculating mode which is activated (or activable) by incoming of the new streaming data point if the index k is at least equal to the finite number n and wherein at least the oldest data point having been fed/ inputted in the processing module is excluded from the processing module. According to the same scheme, by further new streaming and inputted data points, further actualized values of the self-similarity degree are calculated under the said windowed based calculating mode, wherein the finite number n has been selected in order to detect a (possibly presumed or predictable) suspected variation of actualized values within a "shifting" time interval wherein the variation and the time interval are deterministic for at least one kind of malign intrusion.

FIG 3

**Description**

The present invention concerns a method for detection of malign intrusions in a communication system and a related detector mainly according to respective preamble of claims 1 and 7.

Information or communication networks are growing exponentially in importance, size, complexity and number of services supported inside and outside the organizations. Each organization's network interconnects several users, support hundreds or thousands of services, enables the access to shared resources, and transports vital, often confidential, information. These attributes not only make them a tempting target to an attacker but also turn the protection form external/internal threats into a complicated task for network administrators and designers. Physical security of the infrastructures is no longer sufficient. It is necessary to develop method and/or systems that detect and block inappropriate network access to internal services and desktops, as well as other outside threats.

A vast list of attacks to the integrity of the information of an organization can be numbered. Menaces as computer virus, Trojans, worms and/or dedicated attacks are constantly developed and mutated turning the protection of a network into a difficult mission. Detection of a threat in the same day of its incursion (zero day detection) is still like an utopia that many systems administrators pursue.

An Intrusion Detection System (= IDS) is generally a software/hardware tool strategically placed on a given network node to detect suspicious activities. It can be either a software application that runs on the background of an operating systems (= OS), servers or gateways, or a dedicated machine set on a network point. Most part of these systems has to be regularly updated in order to detect new forms of attacks. When a hypothetical attack is detected, an alarm is raised and the system administrator is notified for further instructions.

An IDS can be supported by a function that distinguishes normal traffic from malicious one. To better construct such a function, it is necessary first to find a model that best characterizes network traffic. Recent studies have shown that a data traffic is much more variable than a voice traffic, and that its behaviour is associated to a fractal scaling phenomena.

An IDS inspects all inbound and outbound network activity and identifies suspicious patterns that may indicate a network/system attack attempting at breaking into/compromising a system as a whole. There are several ways to categorize an IDS.

From the point of view of methodology, an IDS can be classified in two different ways:

intrusion signature recognition system, connected to a data base (= DB) which is updated with new signatures of attacks every time a new one is detected (or in a regular time spaced manner) and;
traffic monitoring and characterization tools, extracting standard features of normal traffic.

In terms of system location, an IDS can be classified as:

Network IDS (= NZDS), if it monitors traffic from more than one network point. These systems are usually placed in/near a network gateway, router/switch.
Host IDS (= HIDS), which is mainly user end monitor software that runs in the background of an OS, checking for suspicious behaviour of applications or unwanted modifications to key system files.

Additionally, there are Hybrid systems that act centrally, communicating through a standard protocol designated as Intrusion Detection Message Exchange Format (= IDMEF). These systems gather information from different Host and Network sensors (and different IDS) enabling:

- correlation of intrusion information;
- detection of known attacks;
- recognition of new ones (zero day detection);
- inferring rules for future detections and;
- faster responses to a spreading threat.

From the point of view of system activity, the IDS can be seen as:

a passive IDS that logs and emits an alarm upon detection of a potential attack;
an active (reactive) IDS that responds to a potential attack by logging off a user and/or dropping suspicious packets. It also emits an alarm to notify the system administrator on the potential security breach. These systems are gradually evolving to Intrusion Prevention Systems (= IPS).

In the literature, there are only a few references to Intrusion Detection using an estimation of a self-similarity degree (= Hparam) as originally monitoring means of a traffic flow:

D. A. Nash and D. J. Ragsdale, "Simulation of Self-Similarity in Network Utilization Patterns as a Precursor to Automated Testing of Intrusion Detection Systems," IEEE Transactions on Systems, Man and Cybernetics, vol. 31, pp. 327-331, 2001.

W. H. Allen and G. A. Marin, "On the Self-similarity of Synthetic Traffic for the Evaluation of Intrusion Detection Systems," presented at Symposium on Applications and the Internet (SAINT 03), 2003.

Y. Hua and C.-L. Wu, "Intrusion Detection Based on Artificial Immune System with Self-Similar Traffic," presented at 2nd International Conference on Machine Learning and Cybernetics, Xi'an, 2003.

W. Guo, "A Method of Security Measurement of the Network Data Transmission," Huazhong University of Science and Technology, Presentation (slides), 2005.

The authors, for instance, lightly mention the theoretical hypothesis of using self-similar analyses to intrusion detection. To the best of our knowledge, there is however no advice on Traffic Monitor System (= TMS), Host or Network based IDS using real time Hparam calculation. But, principally, this said theoretical hypothesis is based on a possible detection of certain malign intrusions in a communication system (under self-similar behaviour) in which a set of streaming data points are sequentially inputted into a processing module in order to calculate a first value of a self-similarity degree like the Hurst parameter. These methods are based on a timely continuous inputting of the data points in the processing module, for example over time period like a part of a day. Some statistical values are extracted from the behaviour of the continuous calculated Hurst parameter in order to get a probability of an attack.

One main aim of the invention is hence to improve the capability of detection of malign intrusion in a communication system by using an estimation of a self-similar degree, especially in order to locate an attack as soon as possible or even in real-time.

For this purpose, claims 1 and 7 provides ideal solutions, in that:

In a first embodiment of the invention, a method is proposed for detection of malign intrusions in a communication system in which flows of streaming data are monitored by means of a processing module in which a set of streaming data points has been sequentially inputted into a processing module in order to calculate a first value of a self-similarity degree. Furthermore, said first value of self-similarity degree is calculated by means of a plurality (index k) of auxiliary variables, wherein said index (k $\geq$ 1) is continuously incremented for each new fed data point. Preferably to many calculating methods of the self similarity degree, the following description will not restrictively focus on an Embedded Branching Process (= EBP) in a adapted modified way called modified Embedded Branching Process (= mEBP). As said, the invention can apply for other methods. Commonly for such methods, a new streaming data point is fed into a corresponding modified estimator (= mE) comprising the processing module that runs under a first mode wherein a second actualized value of the self-similarity degree is newly calculated, what means that a behaviour of the self-similar degree over a period of time (from the first inputted data point until the last inputted data point) is made possible.

Now and according to a (possibly pre-definable) finite number n of data points, the processing module provides a windowed based calculating mode which is activated (or activable) by incoming of the new streaming data point if the index k is at least equal to the finite number n and wherein at least the oldest data point having been fed/inputted in the processing module is excluded from the processing module. According to the same scheme, by further new streaming and inputted data points, further actualized values of the self-similarity degree are calculated under the said windowed based calculating mode, wherein the finite number n has been selected in order to detect a (possibly presumed or predictable) suspected variation of actualized values within a "shifting" time interval wherein the variation and the time interval are deterministic for at least one kind of malign intrusion. Hence, the modified Estimator mE can be called as a Windowed modified Estimator (= WmE).

Due that the finite number n limits an observation window size of data streams can be predefined, adjustable at a user side, the method including WmE is very flexible in term of use as well as simply adaptable in term of reducing the dynamic for locating an attack as far as the number n does not undergoes a critical value that could falsify the estimation of the self-similarity degree.

Especially in relation with the above mentioned enhanced flexibility, the processing module (or generally the WmE) can involve a plurality of second, windowed based calculating modes wherein each one of them has a different finite number n as the other, and wherein both modes are activated in parallel for a flow of streaming data. By this way, it is possible to adapt the sensitivity for a special category of attack as some of them have short or long time effects on the network and as well on its self-similar behaviour. Hence, if attacks that involves a short detectable window, one of the numbers n (for example, in a first process) can be correspondingly small enough to detect them as another one number n (in a second process that is engaged in parallel to the first one) can be chosen greater to detect further attacks with slower detectable features. The IDS proposed in the invention allows hence a very broad detection of various intrusions by also keeping the necessary detection period as small as possible.

In a second embodiment of following parts related to the invention, a detector of malign intrusion will be also presented for a possible implementation of the above mentioned intrusion detection method. Further aspects related to the conception of this detector will be also described to exhibit some advantages at least in relation with the main goals of the invention.

According to the whole invention, the novel traffic characterization based IDS has the following advantages over other already existing IDS solutions:

If a mathematical model and/or calculation laws according to the above mention are well chosen and defined, the IDS system will detect any new attack (zero day detection) that modifies the normal traffic behaviour, without any system updates or reconfigurations.

Unlike signature based IDS (where all "bad" examples of network traffic are stressed as signatures on a DB), with the traffic characterization based IDS the definition of normal traffic behaviour is valorised and intrusions are detected by their disrespect to a mathematical law, also not only by satisfaction of a property expressed in a DB. Hence, the traffic characterization based IDS does not require application of a DB driven approach.

Simple traffic dimensions (for example inter packet delay) can reveal attacks that standard IDS systems would detect only by using a "deep" packet inspection. This particular property opens a brand new approach for IDS systems: attacks can be detected even without looking to packet's contents, only by analysing certain arrival parameters, like for example inter-packet gaps from the streaming data points. This complies with legislation regarding personal data confidentiality and simplify the tasks of the detection method (and hence the related dynamic of detection).

According to the invention, a traffic characterization by using the Hurst parameter (= Hparam) has the following advantages over other traffic monitoring systems (= TMS) or IDS:

The Hparam is presently the best metric to characterize fractal distributions. Consequently, it constitutes the best way to characterize network traffic. In relation with the invention, the fractal behaviour of a communication system and interaction on a possible detection of malign intrusion will be more described in the following description.

Most of security breaches are caused by human errors and, as self-similarity finds its seed in the user itself, the proposed method indirectly explores the always-present human factor.

The fractal property is seen on many time-scale of the examined traffic. The Hparam calculation can be, for instance, applied only to the known Internet Control Message Protocol (ICMP) packets, and still detect most of the attacks using this type of messages.

Efficient semi-stealth and scan attacks detection can be used to prevent future denial of device (= DoS) attacks on a network.

Efficient DoS attack detection, even at the attack time. Possibility to combine the Hparam values with other statistics to further decrease the false alarms rate, or to better classify traffic on a network.

Possibility to use the Hparam values as a real time network view in TMS.

Further expansion of the use of the Hparam, as it is defined here, include the use of it as a network health tool and, consequently, as a Quality of Service (QoS) indicator.

As previously said, the invention starts, not restrictively, from a mEBP-calculation method for the estimation of the self-similarity degree. Due to the introduction of the windowed based calculating mode, we reference this novel estimation under the reference "WmE" referred to the windowed modified Estimator or by extension, to a corresponding Windowed modified Estimation.

A WmE providing Hparam for an intrusion detection system or method has the following advantages over other existing IDS:

Due to the window limiting size, a calculation of Hparam can be provided with a very high dynamic that means in real-time over many traffic dimensions and at different sensitivity levels;

High sensitivity to changes in traffic characteristics allows for application of the Hparam as an alarm trigger for deeper packet analyses, leading to significant savings in terms of computational power of the filter based IDS machines;

The Hparam is a very robust measurement metric. The WmE is, by definition, highly adaptable to the current/immediate-past state of the network. The intelligence of the tool is therefore part of the very nature of its definition.

The window value/size n of the WmE can be set to be implementation dependent, opening the possibility to adapt a corresponding algorithm to the network or to future changes of it.

Some already existing solutions can introduce delays on the network on which they operate. The algorithm or calculation that estimates the Hparam is also simple enough to be implemented in hardware because of the window related limited size of possible processing entities. An IDS comprising a Hparam estimation using WmE does also not lead to a possible high speed networks performance degradation.

An advantageously use of a window based estimation method is also possible because it includes a new incoming data point in the novel "shiftable" observation window before discarding the oldest point of the observation window before actualizing the Hparam value. This actualization is made recurring to a smaller number of operations than in the state-of-the-art.

In the same way, the invention provides high dynamic though a time limited local estimation of Hparam because only a certain finite number or (auxiliary) variables (or only a part of them) have to be actualised recursively, each time that a new data point is incoming. This window based method is hence particularly well adapted to software/hardware implementations because the number of sub-estimation-modules in the whole estimator for Hparam is physically limited and the number of operations required for every actualization does not depend (in any way) on the number of points to be taken into account for the estimation.

The following description applies mainly for NIDS because the proposed method constitutes a tool for network traffic analysis and, most of the times, HIDS use logs or system calls to detect malicious activity. To the best of our knowledge, there are no literature references of self-similar behaviour on system calls or logs. Nevertheless, it is expectable that the traffic arriving to a given network terminal machine has network influenced fractal properties. Host driven attacks should be detectable if some kind of infliction is made to the incoming traffic behaviour. For instance, a so called *Portsweep* attack should be detected on a victim Host and a so called *Ipsweep* should not. Notice that no assumptions are made regarding the application of the WmE to logs and/or system calls, and that the expression "incoming traffic" is carefully used to avoid any misunderstanding and/or misinterpretation. The present invention can be part of an OS software firewall package for traffic analysis, since the proposed algorithm or estimation method is light enough to run in the background of any OS without any performance degradation.

The described approach fits perfectly the definition of traffic characterization by an IDS and, since it serves mainly as a detection tool, it does not state any active counter measures to be taken when an attack is detected. Such measures can be integrated in future solutions implementing Intrusion Detection and Prevention using WmE estimator, and are hereby treated as out of scope of this application.

The present invention makes hence use of a Multi Level Trailing Windowed Hurst Estimator based for example on modified Embedded Branching Process mEBP to solve a problem of Intrusion Detection (= ID) in relation with a traffic characterization by providing means to measure and compare the self-similarity degree of a normal network traffic with an intrusion related traffic.

Other advantages and features of the invention are supported by following drawings:

FIG 1    an expected impact of a malign intrusion on the self-similarity degree,

FIG 2    a realisation of a detector of malign intrusion including a WmE for estimation of the self-similarity degree,

FIG 3    two applications involving a use of the detector of malign intrusion,

FIG 4    (a) Satan attack manifestation
(b) Neptune attack manifestation
(c) Mailbomb attack manifestation
(d) Portsweep attack manifestation by start of attack
(e) Portsweep attack manifestation at end of attack start
(f) IPsweep attack manifestation

Before presenting the figures, a mathematical interpretation is presented in order to provide more understanding on the relationship between an intrusion detection and a self-similar behaviour of networks.

Preferably, the present invention applies a Multi Level Trailing Windowed Hurst Estimator based on a WmE adapted algorithm to calculate, in real time, the parameter that most perfectly characterizes any network traffic. The following description further states that the proposed method is simultaneously highly robust and sensitive and can be used to detect new (Zero Day intrusions) and known attacks to a network by the time of their occurrence. Apart from that, as defined in this document or in collaboration with other metrics of network control, the WmE estimator for providing Hparam is an excellent tool to monitor the network traffic's health.

**Traffic behaviour**

It is a well-known that the behaviour of network traffic cannot be expressed with simple mathematical laws, as Linear or Poisson distributions, for instance. Thus, typically applied metrics, fail to fully reflect the fractal/chaotic network behaviour and do not describe well all the aspects of such data flow. The cause of this fractal behaviour is neither clear nor consensual. Some authors defend that the dominant network protocols (like the Transmission Control Protocol (= TCP)), and the way they are handled by network active nodes (namely at hardware buffer level), can induce fractal properties even in a communication between two personal computers. Other authors prove that users themselves introduce a significant random flux in digital communications. Ultimately, self-similarity results from the complex association of network users, computers, and communications protocols. Every input/output queue in a communications system seems to be able to be defined by a Poisson law. However, the big picture of a network reveals that it isn't by the mere sum or application of other linear arithmetic operations to the various distributions that the total distribution of the system can be obtained. In voice communications, the network architecture was circuit-oriented, enabling every router of the given signal to be aware of its source, destination and used path. Current digital data networks function on top of a packet switching architecture, resulting in a new unpredictable facet forcing data traffic analysis to employ new tools for statistical analysis of traffic and user behaviour.

**Mathematical concepts**

A distribution is fractal if, independently from the observation scale of a stream of data points $\{X(t)\}_{t\geq0}$, it never shows any pattern. According to the state of the art, the aforementioned statement can be mathematically expressed using the following set of equations:

$$\{X(t)\}_{t\geq0} \tag{1}$$

$$X(t) \overset{d}{=} a^{-H} X(at) \tag{2}$$

$$\overset{d}{=} \tag{3}$$

$$a > 0 \tag{4}$$

$$H \geq 0 \tag{5}$$

Let H in equation (2) and (5) be the Hparam and symbol (3) denote equality for all finite-dimensional distributions. A random process (1) is said to be self-similar, with self-similar scaling Hparam (5), if equation (2) is satisfied under condition (4). In other terms, the statistical description of the process (1) does not change by scaling simultaneously its amplitude by $a^{-H}$ and the time axis by a (a is a positive constant).

In practical applications, the class of self-similar (H-SS) processes is usually restricted to that of self-similar processes with stationary increments (or H-SSSI processes), which are "integral" of some stationary process. For example, consider the δ-increment process of (1), defined as (7):

$$\{X(t)\}_{t\geq0} \in \{H-SSSI\} \tag{6}$$

$$Y_\delta(t) = X(t) - X(t-\delta) \tag{7}$$

$$0 < H < 1 \tag{8}$$

For an H-SSSI process (6), equation (7) is stationary and (8) holds. The fractality of a particular distribution can be, therefore, characterized by the Hparam = H. If (1) is included in the class H-SSSI according to equation (6), and the distribution has highly chaotic behaviour, the Hparam approaches its upper limit. In the reverse case, the Hparam will approach zero. One of the consequences of the definition of the Hparam is that the direct implementation of (2) to calculate the Hparam in software/hardware would require exponentially growing amount of memory to store the previous values of the process (1). This is the main reason why the Hurst parameter Hparam is still not used for real time self-similarity assessment. For the present invention, an estimation of Hparam based on WmE puts advantageously away with such limitations.

For the purpose of an Intrusion Detection, the most interesting property of chaotic distributions is that the sum of a fractal distribution with a non fractal distribution continues to be a fractal distribution, but the Hparam of the sum distribution is smaller than the first one. Let (11) denote a Fractal Distribution F and (12) a Linear Distribution L. (10) is the function H(.) that calculates the Hparam for a given distribution. Mathematically, the aforementioned property can be represented by equation (9):

$$H(F + L) \leq H(F) \qquad\qquad (9)$$

$$H(.) \qquad\qquad (10)$$

$$F \qquad\qquad (11)$$

$$L \qquad\qquad (12)$$

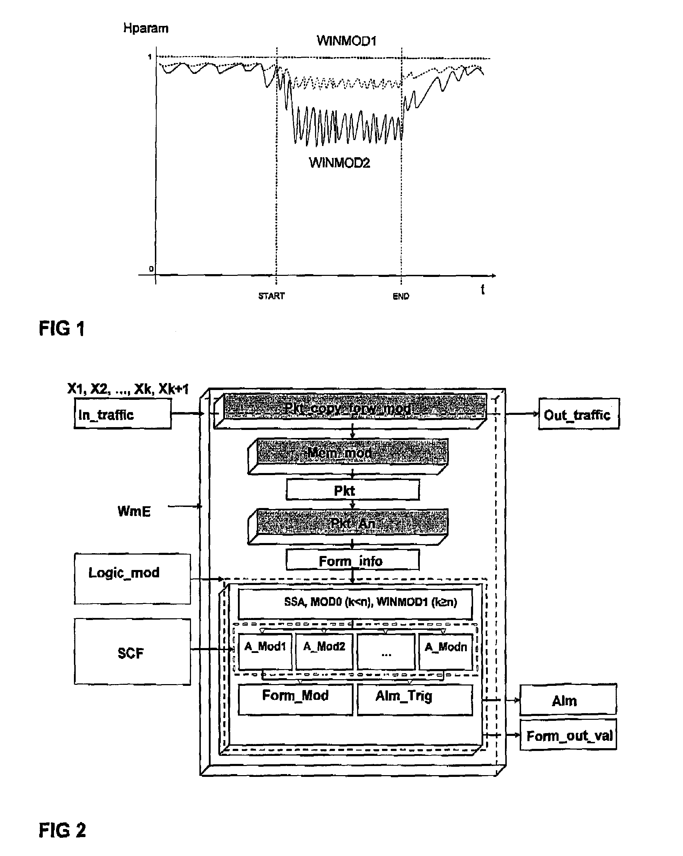

An attack on a given network typically results in the introduction of a pattern overlaid on top of a standard, fractal traffic behaviour. Thus, generally speaking, the Hparam fluctuates (increases or decreases) every time an attack happens. If the Hparam is sequentially calculated on a moving set of values, it is expected that a quick fluctuation of the metrics follows the global decrease or increase of the Hparam (see figure 1 which illustrates this statement for a decreasing trend). Such a phenomenon is easy to explain: during an intrusion, two types of traffic, categorized as normal and abnormal, are mixed, the Hparam raises when detects fractal behaviour, and decreases when an overlaying pattern is detected in the observed traffic.

**WmEBP**

The aforementioned WmEBP is a completely new form of Hparam estimation. It was developed for the applications presented herein, but its field of application can be easily extended to a number of other purposes. For example, it is possible to Use the detector as an IDS comprising a WmE, wherein data points are streaming in form of high loaded flows that are exposed to a risk of collapse, as for example in a network based data traffic defined by:

- a network and its components like nodes, routers, switches, as well for controlling its access or its structure in layers,
- a software or hardware platform for analysis and exchange of secured data with at least another platform like in a financial or confidentiality field,
- a platform of analysis of data related to hydrology, geology, medicine, data recognition or data prediction.

These applications are of course not exhaustive.

The main difference between the WmE and an original mE lies in the fact that the related algorithm calculates the Hparam based on a limited set of previous sample values on which the Hparam was calculated - and not on all the previous values - opening, by that means, the possibility to adjust the inversely proportional relation between history and sensitivity. There are two main novelties in this procedure:

The WmE enables real time multi-level point-by-point estimation of the Hparam (instead of one Hurst calculation for every sample set, containing a pre-defined number of signal samples). Every new incoming packet can be taken as an input function and a respective new set of Hparam estimations as a output module (though one floating point value between 0 and 1 for each examined resolution level). It is thus possible to perform a packet-by-packet network analysis.

The window based specification brings the estimation to the sensitivity level, opening a new set of still unexplored possibilities in the field of the incremental estimation of the Hparam, by providing each value with a limited history and, consequently, expanding the main Hparam depiction capability with a new dynamic adaptation (intelligence) to a limited past values potential. The limited size history normalizes a given set of values, and provides comparison subtract to the analysis. In the case of intrusion detection, if the window size is correctly selected, the normalized values decrease the false alarm rate, maintaining the method sensitive enough to detect critical fluctuations in the traffic flow.

## Advanced analysis

Having assessed the degree of self-similarity in the data network traffic (for instance through Hparam estimation), the following set of operations can be performed over the resulting values so as to emphasize the aforementioned properties. If the degree of self-similarity can be assessed locally (within a limited context window of values):

- Its value can be compared with the respective global value. If the locally assessed value differs from the global reciprocal more than a predefined threshold, it can be interpreted as an intrusion attempt.
- The number of oscillations within a limited context window of values can be calculated and compared with previous values stored in the memory. Too many fluctuations occurring within a tightly limited observation window may indicate an intrusion attempt.
- The actual value of Hparam can be compared with its history average. The variance or other measurement dimensions can also be used to define a threshold to distinguish legitimate data traffic from abnormal one.
- The global trend (e.g. transient) of the self-similarity values can be calculated for various scales. Negative trend can indicate a potential intrusion attempt. A positive trend can indicate normalization of the network traffic behaviour.
- The average and variance of the values of the process can be used in combination with the self-similarity degree as correction factors.

### Studied dimensions (signals of streaming data points)

The intrusion detection and real time traffic characterization can be achieved by the analysis of the self-similarity degree of several types of network traffic relative signals or values that are extracted from the streaming data points, as for example:

- (traffic) dimensions:

  • Delay between packets (= DBP);

  • Packet size;

  • Source and Destination IP addresses;

  • Source and Destination Ports.

- combinations of individual dimensions:

  • Source and Destination Port difference.

- sample subsets:

  • Internat Control Message Protocol (= ICMP) packets. This is the most common information that can be gathered from IP (Internet Protocol) packets without a deep packet inspection. It is also possible to extend the inspection on deeper information.

Once self-similarity is detected for one of the aforementioned dimensions, it will be reflected in other related dimensions/combinations of dimensions. As demonstrated below, the DBP dimension and the ICMP packets subset are particularly well-adapted for attack detection.

**Signal Change Frequency method**

Aiming the development of an efficient and low-cost (in terms of computational effort) alarm trigger, a peculiar calculation method was developed, focused on detecting a increased frequency of trend of the Hparam as variable over the time (actual value $H_{actual}$; previous value $H_{previous}$), observed at the time of intrusion. Given the following expressions:

$$H_{actual} - H_{previous} \qquad (13)$$

$$H_{actual} \qquad (14)$$

$$H_{previous} \qquad (15)$$

where (14) and (15) represent, respectively, the current and the previous Hparam= $H_{actual}$, $H_{previous}$ values, the method is hereby termed "Signal Change Frequency" (= SCF) and its operation principle is based on counting the number of times expression (13) changes its sign value *(+/-)* inside a limited context window of values, and returning a percentage value given by (16):

$$\frac{N_{SCF}}{n} \qquad (16)$$

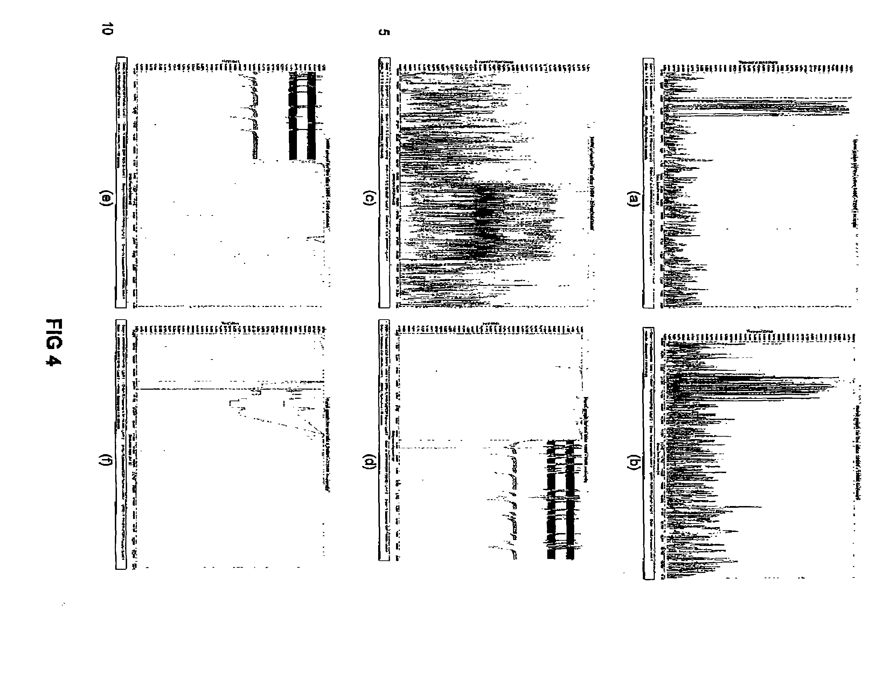

where $N_{SCF}$ represents the number of times for which expression (13) changes its sign inside a limited context window of values with the windows size n. A sequential operation of the said method produces a stream of data points, best represented in the form of a chart, as presented with a few examples given by next figure 4.

**Figure 1** represents an expected impact of a malign intrusion on the self-similarity degree Hparam over the time t according to the invention. As said in a normal or clean data traffic the Hparam approach the value 1. At the start of a malign intrusion START, the Hparam is beginning to decrease significantly as far as the WmE has been correspondingly well adapted according to the invention (especially in term of windowing, of the choice of monitored values of the data points, etc). This first transient of Hparam is followed by a succession of small variation whose average is staying also significantly under the value 1 until the attack ends at the endtime END (see especially first curve WINMOD1). This period between the two down- und up-variations of Hparam is a good advice to know how long an attack has an influence on the system. Accordingly these result should give appropriate dimension for the parameters of WmE which tends to detect the attack with a high dynamic. In this way, the windows size n will be chosen as small as possible in order to reduce the operations required for the estimation of Hparam. However it should be made with care, because a too small window can provide a too high monitoring resolution which could lead to false alarm detection.

It is also important to note that various attacks have different intrusion periods so that the use of a single size n according to the first mode of the processing module in the WmE can lead to a risk of unfiltered attacks. This is the reason why the processing module of WmE can involve a plurality of second, windowed based calculating modes WINMOD1, WINMOD2 wherein each one of them has a different finite number n = n1, n2 (n1>n2) as the other, and wherein both modes are activated in parallel for a flow of streaming data. IN the case of the mode WINMOD1, the transient of Hparam are not significant enough on the contrary of the other mode WINMOD2, because of its higher resolution in the shifting windowing (n is small) of the WmE. Hence, the mode WINMOD1 could be better adapted for another timely longer intrusions.

The possible machine concept of an IDS as detector of malign intrusions in a network and included a WmE for an advanced analysis of the network traffic's degree of self-similarity is illustrated in **Figure 2**.

This detector provides a very well adapted platform for implementing a method for detection of malign intrusions in a communication system in which flows of streaming data are monitored by means of a processing module in which a set of streaming data points X1, X2, ..., Xk has been sequentially inputted into a processing module WmE, SSA in order to calculate a first value of a self-similarity degree Hparam, wherein:

-    said first value of self-similarity degree is calculated by means of auxiliary variables (not represented for reason of clarity), wherein said index k (k ≥ 1) is continuously incremented for each new fed data point,

- a new streaming data point Xk+1 is fed into the processing module under a first mode MOD0 wherein a second actualized value of the self-similarity degree is newly calculated. The method includes also following steps:

    - according to a finite number n of data points, the processing module provides at least one windowed based calculating mode WINMOD1 which is activated by incoming of the new streaming data point Xk+1 if the index k is at least equal to (or greater than) the finite number n and wherein at least the oldest data point X1 having been fed in the processing module is excluded from the processing module,
    - by further new streaming and inputted data points, further actualized values of the self-similarity degree are calculated under said windowed based calculating mode WINMOD1, wherein the finite number n has been selected in order to detect a variation of actualized values of the self-similar degree Hparam within a time interval wherein the variation and the time interval are deterministic for at least one kind of malign intrusion.

Additionally if k≥n, at least the first data point X1 of the set of streaming data points X1, X2,..., Xn, Xn+1 which is the oldest having been fed in the processing module is excluded from the processing module before the second actualized value of the self-similarity degree is estimated by means of updated auxiliary variables that takes in account the newest fed data point Xk+1. Especially before each calculation of the actualized value the auxiliary variables are stored in a history module before their updating in new auxiliary variables. The finite number n limits an observation "shiftable" window size of data streams which is predefined, adjustable at a user side. As previously said, the processing module can also involve a plurality of second, windowed based calculating modes WINMOD1, WINMOD2 wherein each one of them has a different finite number n = n7., n2 as the other, and wherein both modes are activated in parallel for a flow of streaming data.

Now from hardware point of view, the detector and its WmE (Windowed modified Estimator) provides following aspects of features:

- On the front side of WmE, as incoming traffic In_traffic the streaming data points X1, X2, ..., Xk, Xk+1 are sequentially inputted usually in form of packet via a packet copying / forwarding module Pkt_copy_forw_mod that timestamps a copy of each incoming packet and sends it to a queue in a memory module Mem_mod before a further processing, while the original packet is forwarded without imposing any measurable delay in its transmission path Out_traffic.
- If there are any rules to be applied to the packets before the calculation of the self-similar degree (selection of a given subset of packets, for instance), they are applied in a Packet Analysis module Pkt_An that receives packets Pkt that are outputting from the memory module Mem_mod. As said before, simple selection (filtering) of the information can heavily reduce the computation/estimation cost (and reduces also the calculation effort of actualized auxiliary variables) as well as it can unveil disguised attacks. The Packet Analysis module also gets all the necessary implicit and/or explicit information (implicit: inter-packet delay/gap; explicit: packet size) from the packets and formats it over outputted formatted informations Form_info in accordance to a logic module Logic_mod which comprises at least a self-similarity classifier/analyser.
- After rapid actualization of the self-similarity degree performed by a Self-Similarity Assessment SSA in form of a module like a WmE, the values are processed in specialized analysis modules A_Mod1, A_Mod2, ..., A_Modn that implement the abovementioned operations (for instance, by means of an imposed Signal Change Frequency method, described above and referenced with SCF). Outputs of the analysis modules A_Mod1, A_Mod2, ..., A_Modn are connected to a formatting module Form_Mod, wherein key-results on attacks can be directly sent to an output port Form_out_val. Outputs of the analysis modules A_Mod1, A_Mod2, ..., A_Modn are also connected to a module Alm_Trig for triggering and generating an alarm Alm. By application of such a model, network performance degradation is minimized on the forwarding side of the packet copying / forwarding module Pkt_copy_forw_mod, depending only on the processing speed of the Packet Copying/forwarding module, while the response capability depends only on the processing speed of the remaining modules according to the WmE. Since all processing or further modules related to WmE can be efficiently implemented in hardware with high dynamic, the detector is optimized for high-speed networks (Fast Ethernet and above).

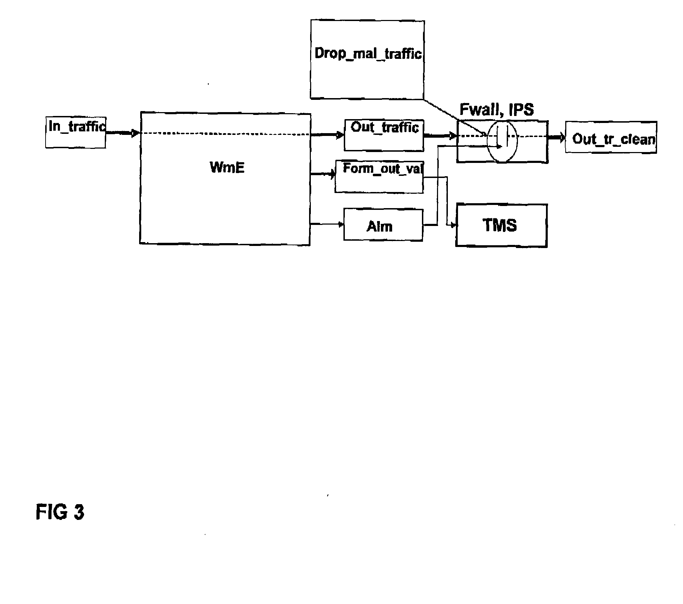

Figure 3 depicts two applications involving a use of the detector WmE of malign intrusion based on the advanced analysis of self-similar degree of the network traffic's In_traffic according to the invention. The module WmE can be positioned in front of a firewall FWall, or generally of an IPS (=Intrusion Protection system) or of a TMS (= Traffic Management system). The values resulting from the analysis of the self-similarity degree can be further used as:

- Alarms Alm, used in a decision module Drop_mal_traffic of the IPS system as a whole in order to drop malign attacks that is outputted from WmE and tray to pass though the IPS system;
- a set of statistical measures Form_out_val used for monitoring or further processing of collected traffic data.

At the output of IPS system, the final outgoing data traffic Out_tr_clean is blocked, cleaned or transmitted if it is free of the detected attacks.

In resume and according to figures 1, 2, 3, the invention relates to a detector of malign intrusion in a communication system in which flows of streaming data X1, X2, ..., Xk are monitored by means of an estimator WmE of a self-similarity degree Hparam especially adapted for a Hurst based monitoring of said flows of streaming data, wherein the estimator comprises:

- an input for a sequential inputting of streaming data in the processing module,
- a processing module SSA with a first calculating mode for estimating a value of the self-similarity degree by means of auxiliary variables for which of them at least one value is additionally updated by incoming of a new data point Xk+1 at the input,

and wherein:

- a data point counter is provided controlling that over a predefinable finite number n of inputted data points, the processing module provides at least a second, windowed based calculating mode WINMOD1 which is activated by incoming of the new streaming data point Xk+1 if the index k is at least equal to (or greater than) the finite number n and wherein at least the oldest data point X1 having been fed in the processing module is excluded from the processing module,
- by further new streaming and inputted data points, further actualized values of the self-similarity degree are calculated under said windowed based calculating mode, wherein a command module for selecting an amount of the finite number n has been activated in order to detect via monitoring means A_Mod1, A_Mod2, ...A_Modn a variation of actualized values within a time interval wherein the variation and the time interval are deterministic for at least one kind of malign intrusion.

The estimator is connected to an history update module that stores the auxiliary variables and updates them for a new estimation of the value of the self-similarity degree after the oldest streaming data point X1 is outputted from the processing module SSA as the new streaming data point has already been inputted in the input of the processing module.

Optionally, a command module provides a means for a parallel selection of different amounts of the finite number n so that the processing module provides, simultaneously for one set of streaming data points, a plurality of second, windowed based calculating modes WINMOD1, WINMOD2, ... (see figure 1) each one of them being processed with a different finite number (n) as the other ones. This enhances the sensitivity referred to a category of one attack and permits also to detect a broader spectrum of various categories of attacks. If these second windowed modes are implemented timely in parallel, the dynamic is also not infringed, as for a basic detection with WmE.

Monitor means connected or integrated in the WmE communicate with at least one decision module Form_Mod, Alm_Trig, Drop_mal_traffic that computes all the values of estimated self-similarity degree obtained from said second, windowed based calculating modes (WINMOD1, WxNMOD2, ...) or that filter directly data from normal safe/secure traffic. By this way, it is possible to minimize an erroneous detection and/or to enhance the dynamic of detection and/or to prevent a further by means of outputted alarms.

The detector's input (and output) is easily connectable via a simple coupler between a link In_traffic and a user side (FWall, IPS) in the network, especially in front of a firewall for signalling to it an alarm related to a detected malign intrusion, before said firewall permits a transmission of the monitored traffic.

The detector's estimator WmE, SSA can be also implemented in a platform for a network management system, especially in form of a software that runs by means of memory and processing means at a high speed. A realisation of electronically logical modules is also possible for this purpose.

The detector provides at least a second input Logic_Mod, SCF for inputting detection parameters, detection schemes and/or actualized procedures, especially for a selection of at least one finite number n to the command module.

Finally, the figure 6 represents the behaviour of Hparam as a function of the time by various formatted informations related to the WmE as well as by adaptable values of the window size n. In these figures, the transients of Hparam depict the detection of malign intrusions. Due to the "self-speaking" of these results, a person skilled in the art will understand that complementary to the high dynamics of WmE, the invention provides a high sensitivity of detection in a broad spectrum of attacks. New attacks can be also analysed by a simulation outside from a real public network and according to their properties over the WmE, the WmE can be re-adapted in a simple and a fast way. Back to the figure 6, each one represents:

(a) a Satan attack manifestation
(b) a Neptune attack manifestation

(c) a Mailbomb attack manifestation
(d) a Portsweep attack manifestation by start of attack
(e) a Portsweep attack manifestation at end of attack start
(f) a IPsweep attack manifestation

These are only a few examples of many other one that also have the same, high significance in term of IDS.

It is also possible that the updated values of the self-similar parameter Hparam that are calculated with a windowed based estimator are compared with updated values of the self-similar parameter Hparam that are calculated using non windowed (= quasi unlimited/infinite) based estimator for detection of at least one kind of malign intrusion. By this way, both methods and results constitute an improvement in that it is possible to compare the first (non windowed) to the average metric and the second (windowed) to the moving average metric. Or in other words, the first represents a normality over a big sample of streaming data as the second one provides an degree on the dynamic or the sensitivity of the detection.

**Claims**

1. Method for detection of malign intrusions in a communication system in which flows of streaming data are monitored by means of a processing module in which a set of streaming data points (X1, X2, ..., Xk) has been sequentially inputted into a processing module in order to calculate a first value of a self-similarity degree (Hparam), wherein:

   - said first value of self-similarity degree is calculated by means of auxiliary variables, wherein said index ($k \geq 1$) is continuously incremented for each new fed data point,
   - a new streaming data point (Xk+1) is fed into the processing module under a first mode (MOD0) wherein a second actualized value of the self-similarity degree is newly calculated,

   **characterized in that**

   - according to a finite number (n) of data points, the processing module provides a windowed based calculating mode (WINMOD1) which is activated by incoming of the new streaming data point (Xk+1) if the index (k) is at least equal to the finite number (n) and wherein at least the oldest data point (X1) having been fed in the processing module is excluded from the processing module,
   - by further new streaming and inputted data points, further actualized values of the self-similarity degree are calculated under said windowed based calculating mode (WINMOD1), wherein the finite number (n) has been selected in order to detect a variation of actualized values within a time interval wherein the variation and the time interval are deterministic for at least one kind of malign intrusion.

2. Method according to claim 1, whereby at least the first data point (X1) of the set of streaming data points (X1, X2,..., Xn, Xn+1) which is the oldest having been fed in the processing module is excluded from the processing module before the second actualized value of the self-similarity degree is estimated by means of updated auxiliary variables that takes in account the newest fed data point (Xk+1).

3. Method according to claim 2, whereby before each calculation of the actualized value the auxiliary variables are stored in a history module before their updating in new auxiliary variables.

4. Method according to one of previous claims, whereby the finite number (n) limits an observation window size of data streams which is predefined, adjustable at a user side.

5. Method according to one of previous claims, whereby the processing module involves a plurality of second, windowed based calculating modes (WINMOD1, WINMOD2) wherein each one of them has a different finite number (n = n1, n2) as the other, and wherein both modes are activated in parallel for a flow of streaming data.

6. Method according to one of previous claims, whereby the updated values of self-similar degree (Hparam) that are calculated with a windowed based estimator (WmE) are compared with updated values of self-similar degree (Hparam) that are calculated using a non windowed based estimator for detection of at least one kind of malign intrusion.

7. Detector of malign intrusion in a communication system in which flows of streaming data (X1, X2, ..., Xk) are monitored by means of an estimator (WmE) of a self-similarity degree (Hparam) adapted for a Hurst based monitoring of said flows of streaming data, wherein the estimator comprises:

- an input for a sequential inputting of streaming data in the processing module,
- a processing module (SSA) with a first calculating mode for estimating a value of the self-similarity degree by means of auxiliary variables for which of them at least one value is additionally updated by incoming of a new data point (Xk+1) at the input,

**characterized in that,**

- a data point counter is provided controlling that over a finite number (n) of inputted data points, the processing module provides a second, windowed based calculating mode (WINMOD1) which is activated by incoming of the new streaming data point (Xk+1) if the index (k) is at least equal to the finite number (n) and wherein at least the oldest data point (X1) having been fed in the processing module is excluded from the processing module,
- by further new streaming and inputted data points, further actualized values of the self-similarity degree are calculated under said windowed based calculating mode, wherein a command module for selecting an amount of the finite number (n) has been activated in order to detect via monitoring means (A_Mod1, A_Mod2, ...A_Modn) a variation of actualized values within a time interval wherein the variation and the time interval are deterministic for at least one kind of malign intrusion.

**8.** Detector according to claim 7, wherein the estimator is connected to an history update module that stores the auxiliary variables and updates them for a new estimation of the value of the self-similarity degree after the oldest streaming data point (X1) is outputted from the processing module (SSA) as the new streaming data point has already been inputted in the input of the processing module.

**9.** Detector according to one of previous claims 7-8, wherein the command module provides a means for a parallel selection of different amounts of the finite number (n) so that the processing module provides, simultaneously for one set of streaming data points, a plurality of second, windowed based calculating modes (WINMOD1, WINMOD2, ...) each one of them being processed with a different finite number (n) as the other ones.

**10.** Detector according to claim 9, wherein the monitor means communicate with a decision module (Form_Mod, Alm_Trig) that computes all the values of estimated self-similarity degree obtained from said second, windowed based calculating modes (WINMOD1, WINMOD2, ...).

**11.** Detector according to one of previous claims 7-10, wherein the input is connectable via a coupler between a link (In_traffic) and a user side (FWall, IPS) in the network, especially in front of a firewall for signalling to it an alarm related to a detected malign intrusion, before said firewall permits a transmission of the monitored traffic.

**12.** Detector according to one of previous claims 7-11, wherein the estimator (WmE, SSA) is implemented in a platform for a network management system.

**13.** Detector according to one of previous claims 7-12, wherein the detector provides a second input (Logic_Mod, SCF) for inputting a detection parameters, detection schemes and/or procedures, especially for a selection of at least one finite number (n) to the command module.

**14.** Use of the detector according to one of the previous claims 7-13, wherein data points are streaming in form of high loaded flows that are exposed to a risk of collapse, as for example in a network based data traffic defined by:

- a network and its components like nodes, routers, switches, as well for controlling its access or its structure in layers,
- a software or hardware platform for analysis and exchange of secured data with at least another platform like in a financial or confidentiality field,
- a platform of analysis of data related to hydrology, geology, medicine, data recognition or data prediction.

Hparam

WINMOD1

1

WINMOD2

0

START                    END                    t

## FIG 1

X1, X2, ..., Xk, Xk+1

In_traffic → Pkt copy forw mod → Out_traffic

Mem mod

Pkt

WmE →

Pkt An

Form_info

Logic_mod →

SSA, MOD0 (k<n), WINMOD1 (k≥n)

SCF →

| A_Mod1 | A_Mod2 | ... | A_Modn |

| Form_Mod | Alm_Trig |

Alm

Form_out_val

## FIG 2

Drop_mal_traffic

Fwall, IPS

In_traffic

WmE

Out_traffic

Form_out_val

Alm

TMS

Out_tr_clean

FIG 3

(a)

(b)

(c)

(d)

(e)

(f)

**FIG 4**

**EP 1 983 714 A1**

**European Patent Office**

# EUROPEAN SEARCH REPORT

Application Number

EP 07 00 8085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MEHRVAR H R ET AL: "Estimation of degree of self-similarity for traffic control in broadband satellite communications" ELECTRICAL AND COMPUTER ENGINEERING, 1995. CANADIAN CONFERENCE ON MONTREAL, QUE., CANADA 5-8 SEPT. 1995, NEW YORK, NY, USA,IEEE, US, vol. 1, 5 September 1995 (1995-09-05), pages 515-518, XP010193728 ISBN: 0-7803-2766-7 * paragraph [04.1] * ----- | 1-14 | INV. H04L29/06 H04L12/26 |
| D,Y | DAVID A NASH ET AL: "Simulation of Self-Similarity in Network Utilization Patterns as a Precursor to Automated Testing of Intrusion Detection Systems" IEEE TRANSACTIONS ON SYSTEMS, MAN AND CYBERNETICS. PART A: SYSTEMS AND HUMANS, IEEE SERVICE CENTER, PISCATAWAY, NJ, US, vol. 31, no. 4, July 2001 (2001-07), XP011056406 ISSN: 1083-4427 * the whole document * ----- -/-- | 1-14 | |
| | | | **TECHNICAL FIELDS SEARCHED (IPC)** H04L |

The present search report has been drawn up for all claims

| Place of search | Date of completion of the search | Examiner |
|---|---|---|
| Munich | 19 October 2007 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

European Patent
Office

Application Number

EP 07 00 8085

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MOHD YAZID IDRIS, ABDUL HANAN ABDULLAH, MOHD AISAINI MAAROF: "Iterative Window Size Estimation on Self-Similarity Measurement for Network Traffic Anomaly Detection" INTERNATIONAL JOURNAL OF COMPUTING & INFORMATION SCIENCES, [Online] vol. 2, no. 2, 18 March 2005 (2005-03-18), pages 84-90, XP002454928 Retrieved from the Internet: URL:http://www.ijcis.info/International%20 Journal%20of%20Computing%20and%20Informati on%20Sciences_files/Vol2N2/84-910KS.pdf> [retrieved on 2007-10-15] * the whole document * ----- | 1-14 | |
| A | US 6 856 948 B1 (TRAN HUNG V [US]) 15 February 2005 (2005-02-15) * column 2, line 43 - column 6, line 8 * ----- | 1-14 | |
| A | HAGIWARA T ET AL: "High-speed calculation method of the hurst parameter based on real traffic" LOCAL COMPUTER NETWORKS, 2000. LCN 2000. PROCEEDINGS. 25TH ANNUAL IEEE CONFERENCE ON NOVEMBER 8-10, 2000, PISCATAWAY, NJ, USA,IEEE, 8 November 2000 (2000-11-08), pages 662-669, XP010527502 ISBN: 0-7695-0912-6 * paragraphs [0002], [0004] * ----- | 1-14 | TECHNICAL FIELDS SEARCHED (IPC) |

-/--

The present search report has been drawn up for all claims

| Place of search | Date of completion of the search | Examiner |
|---|---|---|
| Munich | 19 October 2007 | Bec, Thierry |

EPO FORM 1503 03.82 (P04C01)

# EP 1 983 714 A1

**European Patent Office**

## EUROPEAN SEARCH REPORT

Application Number

EP 07 00 8085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OWEN DAFYDD JONES,: "Fast, efficient on-line simulation of self-similar processes; Corrected version" UNIVERSITY OF MELBOURNE, [Online] 2004, pages 1-12, XP002454611 Retrieved from the Internet: URL:http://www.ms.unimelb.edu.au/~odj/pape rs/EBP_SimD2.pdf> [retrieved on 2007-09-14] * paragraphs [0001], [0002] * ----- | 1-14 | |
| A | JP 2007 060440 A (RES ORGANIZATION OF INFORMATIO) 8 March 2007 (2007-03-08) * paragraph [0013] - paragraph [0020] * * paragraph [0029] - paragraph [0038] * ----- | 1-14 | |

TECHNICAL FIELDS
SEARCHED (IPC)

The present search report has been drawn up for all claims

| Place of search | Date of completion of the search | Examiner |
|---|---|---|
| Munich | 19 October 2007 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

19

## ANNEX TO THE EUROPEAN SEARCH REPORT
## ON EUROPEAN PATENT APPLICATION NO.

EP 07 00 8085

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2007

| Patent document cited in search report | | Publication date | Patent family member(s) | Publication date |
|---|---|---|---|---|
| US 6856948 | B1 | 15-02-2005 | NONE | |
| JP 2007060440 | A | 08-03-2007 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. A. NASH ; D. J. RAGSDALE.** Simulation of Self-Similarity in Network Utilization Patterns as a Precursor to Automated Testing of Intrusion Detection Systems. *IEEE Transactions on Systems, Man and Cybernetics,* 2001, vol. 31, 327-331
- **W. H. ALLEN ; G. A. MARIN.** On the Self-similarity of Synthetic Traffic for the Evaluation of Intrusion Detection Systems. *Symposium on Applications and the Internet,* 2003
- **Y. HUA ; C.-L. WU**. Intrusion Detection Based on Artificial Immune System with Self-Similar Traffic. *2nd International Conference on Machine Learning and Cybernetics,* 2003
- **W. GUO.** A Method of Security Measurement of the Network Data Transmission. *Huazhong University of Science and Technology, Presentation (slides,* 2005